(19) **Europäisches Patentamt / European Patent Office / Office européen des brevets**

(11) **EP 2 408 651 B1**

(12) **FASCICULE DE BREVET EUROPEEN**

(45) Date de publication et mention
de la délivrance du brevet:
**07.05.2014 Bulletin 2014/19**

(51) Int Cl.:
**B60T 8/172** (2006.01)  **B62D 17/00** (2006.01)
**B60G 7/00** (2006.01)  **B60G 17/019** (2006.01)
**G01N 19/02** (2006.01)

(21) Numéro de dépôt: **10709224.9**

(22) Date de dépôt: **18.03.2010**

(86) Numéro de dépôt international:
**PCT/EP2010/053543**

(87) Numéro de publication internationale:
**WO 2010/106137 (23.09.2010 Gazette 2010/38)**

(54) **PROCÉDÉ DE DÉTERMINATION D'UN COEFFICIENT D'ADHÉRENCE D'UNE ROUE PAR MISE EN PINCE SIMULTANÉE**

VERFAHREN ZUR BESTIMMUNG EINES RADHAFTUNGSKOEFFIZIENTEN DURCH GLEICHZEITIGES FESTKLEMMEN

METHOD FOR DETERMINING A WHEEL GRIP COEFFICIENT BY SIMULTANEOUS CLAMPING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.03.2009 FR 0951765**

(43) Date de publication de la demande:
**25.01.2012 Bulletin 2012/04**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **DENIMAL, Philippe**
**F-63200 Marsat (FR)**
• **MUS, Jean-Marie**
**F-63200 Marsat (FR)**
• **MARLIER, Fabien**
**F-63000 Clermont-Ferrand (FR)**
• **FAGOT-REVURAT, Lionel**
**F-03140 Barberier (FR)**

(74) Mandataire: **Dequire, Philippe Jean-Marie Denis**
**Manufacture Française des Pneumatiques, Michelin,**
**23, place des Carmes-Déchaux,**
**SGD/LG/PI - F35- Ladoux**
**63040 Clermont-Ferrand Cedex 09 (FR)**

(56) Documents cités:
**WO-A-00/75618**  **WO-A-03/066400**
**FR-A- 2 916 412**

## Description

### Domaine de l'invention

La présente invention concerne un procédé de détermination d'une grandeur caractéristique des conditions d'adhérence d'une roue d'un véhicule en roulage sur un sol donné.

### Arrière plan technologique

Il est connu que les conditions d'adhérence d'une roue en roulage sur un sol donné et notamment son coefficient d'adhérence maximal évoluent très fortement en fonction des conditions de roulage. Parmi les principaux facteurs se trouvent le type de route sur lequel roule la roue, les conditions climatiques et la température.

Il est particulièrement intéressant de connaître en temps réel les conditions d'adhérence et notamment le coefficient d'adhérence maximal de la roue en roulage pour déterminer si celle-ci est proche ou non de perdre son adhérence sur le sol.

Cette information concernant l'adhérence de la roue peut être transmise au conducteur du véhicule muni de la roue pour qu'il adapte sa conduite en conséquence, ou à un dispositif électronique de contrôle de la tenue de route du véhicule.

Il a été montré dans l'état de la technique, notamment dans WO 03/066400, que l'on peut déterminer le coefficient d'adhérence maximal d'un pneumatique d'une roue à partir de mesures des trois composantes des efforts appliqués sur le pneumatique, du couple d'autoalignement, de la pression de gonflage du pneumatique et du carrossage du pneumatique.

En particulier, ce document précise que cette détermination du coefficient d'adhérence maximal est possible lorsqu'il existe une zone de glissement dans l'aire de contact du pneumatique avec le sol de roulage. Dès que cette zone de glissement existe, à même effort transversal par exemple, le couple d'auto alignement est une fonction monotone du coefficient d'adhérence maximal.

La limite de cette méthode de détermination du coefficient d'adhérence maximal est qu'elle ne peut être effectuée que sous des efforts d'accélération ou de freinage importants ou en virage.

Le document FR 2 916 412 présente un montage de roue d'un véhicule automobile par l'intermédiaire d'un porte-roue associé au véhicule par au moins un pivot de sorte que le plan de la roue puisse présenter un premier angle de pince sensiblement nul et un deuxième angle de pince non nul. Le montage comprend un actionneur binaire avec un dispositif de commande agencé pour déplacer le plan de la roue dans des conditions de roulage données.

### Description de l'invention

Dans ce qui suit, on entend par « roue » un ensemble constitué d'une roue (au sens particulier avec un disque et une jante) et d'un pneumatique monté sur la jante de la roue.

Par définition, chaque roue d'un essieu d'un véhicule fait un angle, dit angle de braquage, avec un plan perpendiculaire au sol et parallèle à la direction d'avancement du véhicule. Lorsque sur un même essieu les plans des roues de cet essieu convergent pour se couper vers l'avant du véhicule, on parle de pince. Lorsque sur un même essieu les plans des roues de cet essieu convergent pour se couper vers l'arrière du véhicule, on parle d'ouverture. L'angle de carrossage d'une roue est l'angle que fait, dans un plan perpendiculaire au sol et contenant l'axe de la roue, le plan de la roue avec le plan médian du véhicule. On parle de contre carrossage (ou de carrossage négatif) lorsque les plans des roues d'un même essieu se croisent au dessus du sol.

L'invention a pour objet un procédé de détermination d'une grandeur caractéristique représentative des conditions d'adhérence d'une roue d'un véhicule en roulage sur un sol donné, comprenant les étapes suivantes :

- imposer aux deux roues d'un même essieu du véhicule une variation simultanée d'angle de braquage donnée, la variation d'angle de braquage étant d'amplitude identique pour les deux roues mais de sens opposés ; et
- mesurer la grandeur caractéristique pour l'une au moins des deux roues.

Selon cet objet de l'invention, on impose une mise en braquage simultanée des deux roues d'un même essieu. De préférence une mise en pince simultanée de ces deux roues lorsqu'il s'agit d'un essieu arrière et une mise en ouverture simultanée des deux roues pour un essieu avant. Cette mise en pince (respectivement ouverture) simultanée a l'avantage que les efforts transversaux produits par les deux roues se compensent et s'annulent quasiment. L'équilibre dynamique du véhicule n'est ainsi pas perturbé. En particulier, cette mise en pince (respectivement ouverture) simultanée est possible lors d'un roulage en ligne droite, c'est-à-dire pratiquement à tout moment.

Selon un mode de réalisation particulièrement simple, on peut imposer une seule variation simultanée des angles de braquages des deux roues d'un même essieu. Préférentiellement, on impose successivement aux deux roues d'un même essieu plusieurs variations simultanées d'angle de braquage, les variations des angles de braquage étant d'amplitudes identiques pour les deux roues et de sens opposés.

Cela revient à imposer une mise en pince (respectivement ouverture) simultanée des deux roues d'un même essieu arrière (respectivement avant) avec des amplitudes de pinces (respectivement d'ouvertures) variables.

De préférence, après avoir imposé aux deux roues une variation d'angle de braquage simultanée donnée, on effectue la mesure de la grandeur caractéristique après une distance de roulage du véhicule supérieure à la moitié du périmètre de roulage des roues. Cela permet une stabilisation des efforts transmis par les roues.

La grandeur caractéristique mesurée peut être le couple d'autoalignement $M_Z$ de la roue.

La grandeur caractéristique mesurée peut aussi être l'effort latéral $F_Y$ de la roue.

Ces deux mesures, à angle de braquage donné, donnent chacune une première estimation des conditions d'adhérence de la roue en temps réel qui peut être très utile.

De préférence, la grandeur caractéristique mesurée comprend le couple autoalignement $M_Z$ et l'effort latéral $F_Y$. La mesure simultanée de ces deux grandeurs permet d'obtenir une excellente estimation des conditions d'adhérence de la roue et notamment du coefficient d'adhérence maximal par comparaison d'un abaque et des mesures.

Le fait d'obtenir plusieurs points de mesure améliore grandement la précision des estimations en temps réel.

On peut par exemple obtenir au moyen de ce procédé une bonne estimation de l'évolution de, par exemple, l'effort latéral $F_Y$ avec l'angle de braquage $\delta$ et notamment de la valeur maximale de cet effort et l'utiliser comme entrée pour les systèmes d'aide à la conduite du véhicule.

L'ordre de grandeur des angles de braquage imposés est compris, de préférence, entre 0,5 et 2 degrés et très préférentiellement entre 1 et 1,5 degré. A ces valeurs de braquage, on constate que pour une très large majorité des pneumatiques tourisme, il existe une zone de glissement dans l'aire de contact, même dans des conditions de bonne adhérence.

Ces valeurs d'angle de braquage imposées ont aussi l'avantage de n'être pratiquement pas décelables par un passager du véhicule.

Pour améliorer la qualité de l'estimation, on peut aussi mesurer en outre la pression de gonflage du pneumatique de la roue.

Il est possible et préférable d'effectuer cette mise en pince simultanée lorsque le véhicule est en roulage ligne droite.

L'essieu choisi est de préférence non directeur et non moteur. Il est alors souhaitable de vérifier, avant d'appliquer la mise en pince simultanée, que l'essieu n'est pas soumis à un couple freineur. La composante axiale ou longitudinale $F_X$ des efforts est alors quasiment nulle et n'intervient pas dans l'estimation de la grandeur caractéristique et du $\mu_{max}$.

L'essieu peut aussi être un essieu moteur. Il est alors souhaitable de vérifier que le véhicule n'est pas dans une phase d'accélération ou de freinage.

**Description brève des dessins**

Tous les détails de réalisation sont donnés dans la description qui suit, complétée par les figures 1 à 8, dans lesquelles :

- la figure 1 illustre la relation entre le couple d'autoalignement $M_Z$ et la force latérale $F_Y$ sur un pneumatique réel en fonction du coefficient d'adhérence maximal $\mu_{max}$ ;
- la figure 2 illustre de façon très schématique en vue de dessus le fonctionnement du procédé selon l'un des objets de l'invention dans le cas d'un essieu arrière de véhicule automobile, les deux roues étant à angle de pince usuel proche de zéro (Fig. 2) et à angle de pince non nul (Fig. 3) ;
- la figure 4 présente en coupe horizontale un mode de réalisation d'un montage de roue pour mettre en oeuvre un procédé conforme à l'invention ; et
- la figure 5 présente une vue en perspective partielle, vu du côté du châssis du véhicule, du montage de roue de la figure 4.

**Description détaillée de modes de réalisation de l'invention**

Un objet de l'invention est un procédé de détermination d'une grandeur caractéristique représentative des conditions d'adhérence d'une roue d'une véhicule en roulage sur un sol donné dans lequel on impose aux deux roues d'un même essieu une variation d'angle de braquage donnée, la variation d'angle de braquage étant d'amplitude identique pour les deux roues mais de sens opposés et on mesure la grandeur caractéristique pour au moins l'une des deux roues.

Il est préférable de pratiquer une mise en pince (respectivement ouverture) simultanée des deux roues lorsque l'essieu est un essieu arrière (respectivement un essieu avant). La mise en pince des deux roues d'un essieu arrière d'un véhicule améliore la stabilité dynamique du véhicule ; la mise en ouverture des deux roues d'un essieu avant d'un véhicule entraîne des conséquences similaires.

Dans ce qui suit, on va illustrer les objets de l'invention dans le cas d'un essieu arrière d'un véhicule automobile ; on parlera de mise en pince simultanée des deux roues de cet essieu.

On souhaite estimer ou mesurer en temps réel le coefficient d'adhérence $\mu_{max}$ d'une roue sur un sol de roulage ou une grandeur caractéristique liée à ce coefficient.

Il est connu, par exemple de WO 03/066400 déjà cité, que le $\mu_{max}$ dépend notamment des paramètres suivants :

- l'effort moteur ou freineur Fx appliqué à la roue ;
- l'effort de poussée latérale ou effort latéral $F_Y$ appliqué à la roue ;

- la charge $F_Z$ portée par la roue ;
- le couple d'autoalignement $M_Z$ ou le moment autour de l'axe vertical exercé sur le pneumatique ;
- le carrossage de la roue ; et
- la pression de gonflage du pneumatique de la roue.

Ceci étant vrai lorsqu'il existe une zone de glissement dans l'aire de contact du pneumatique de la roue et le sol de roulage.

En fait, il est aussi d'expérience commune qu'un changement de conditions d'adhérence du sol de roulage, par exemple le passage d'une route sèche à une route mouillée diminue notablement la valeur du $\mu_{max}$ et en particulier, à un angle de braquage donné, diminue notablement la valeur de la force latérale $F_Y$ et du couple d'autoalignement $M_Z$ dès qu'apparaît ce glissement dans l'aire de contact.

En conséquence, selon un premier mode de réalisation, le procédé selon l'invention permet d'obtenir une première estimation d'une grandeur caractéristique liée aux conditions d'adhérence d'une roue basée seulement sur la valeur mesurée de la force latérale ou du couple d'autoalignement. Cette estimation n'est pas très précise mais permet, par exemple, d'avertir le conducteur de conditions d'adhérence dégradées ou de modifier les lois de fonctionnement des dispositifs d'aide à la stabilité tels les ESP ou d'aide au freinage tels les ABS.

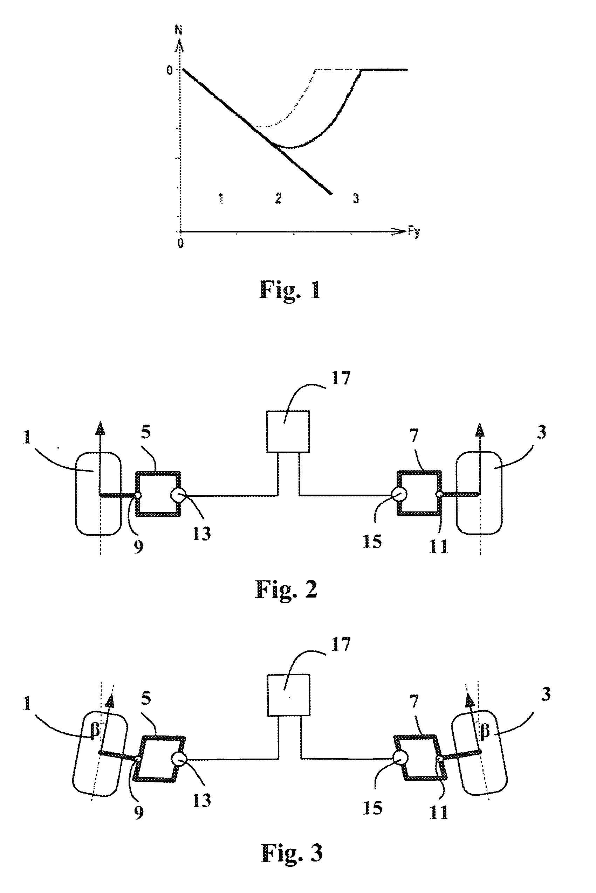

La figure 1 illustre la relation entre le couple autoalignement $M_Z$ et l'effort latéral $F_Y$ pour deux coefficients d'adhérence $\mu_{max}$ donnés, lorsque $F_X$ est nul et $F_Z$ constant.

Sur ce graphique, on distingue trois zones : la zone 1 correspond à une absence de glissement de l'aire de contact du pneumatique, la zone 2 correspond à un glissement partiel et la zone 3 correspond à un glissement total.

Comme on peut le constater, lorsque l'on est dans la zone 1, c'est-à-dire lorsque le pneumatique adhère parfaitement au sol de roulage, la valeur du couple d'autoalignement $M_Z$ est sensiblement proportionnelle à la valeur de la poussée latérale $F_Y$ le coefficient de proportionnalité dépendant majoritairement de la longueur de l'aire de contact.

Selon un mode de traitement préférentiel, les grandeurs caractéristiques du $\mu_{max}$ mesurées comprennent au moins le couple d'autoalignement $M_Z$ et l'effort latéral $F_Y$. Il est alors très aisé d'obtenir une bonne estimation de la valeur du $\mu_{max}$ en utilisant un abaque donnant une série de courbes de couple d'autoalignement en fonction de la force latérale pour diverses valeurs de $\mu_{max}$.

Ce traitement est de bonne qualité parce que les autres paramètres cités dans le document WO 03/066400 sont soit sensiblement constants (angle de carrossage, pression de gonflage, charge appliquée) soit sensiblement nuls ($F_X$).

Une mesure complémentaire de la pression de gonflage du ou des pneumatiques des roues améliore encore la précision de la mesure.

Une condition nécessaire est d'imposer un angle de pince tel qu'il existe un glissement dans l'aire de contact entre le pneumatique et le sol de roulage. Des essais réalisés sur un ensemble de pneumatiques tourisme ont montré que lorsque l'angle de pince est de 0,5 degré ou moins, ce glissement n'existe que dans des conditions d'adhérence très dégradées. Lorsque l'on impose un seul angle de pince, l'angle imposé doit donc être supérieur à 0,5 degrés. En revanche, lorsque l'angle de pince imposé est de l'ordre de deux degrés, le conducteur du véhicule peut commencer à y être sensible et les poussées latérales deviennent très notables ce qui peut entraîner une certaine usure des pneumatiques. Les angles imposés doivent donc préférentiellement être inférieurs à 2 degrés. Une gamme préférentielle est comprise entre 1 et 1,5 degrés.

Selon un autre mode de réalisation du procédé selon l'invention, on impose successivement aux deux roues d'un même essieu une mise en pince simultanée (respectivement ouverture) lorsque l'essieu est un essieu arrière (respectivement un essieu avant) pour plusieurs amplitudes différentes des angles de braquage.

On peut alors obtenir une courbe complète ou quasi complète de l'évolution de la grandeur caractéristique mesurée en fonction des angles de braquage imposés. Cela permet d'améliorer sensiblement la précision de l'estimation du coefficient d'adhérence maximal $\mu_{max}$.

Selon un autre mode de réalisation préférentiel, on impose une variation croissante de l'angle de braquage et de préférence avec une cinétique de variation inférieure ou égale à 0,1 degré/mètre parcouru par le véhicule.

Pour une amplitude de deux degrés, la distance parcourue par le véhicule pour l'ensemble du test est alors supérieure ou égale à 20 mètres.

Plus préférentiellement, la cinétique de variation est comprise entre 0,05 et 0,1 degré/mètre parcouru. Le test dure alors entre 20 et 40 mètres.

On peut alors mesurer, de préférence en continu, le couple d'autoalignement pour au moins l'une des deux roues et déterminer comme grandeur caractéristique l'angle de braquage $\delta_c$ pour lequel le couple d'autoalignement est maximum.

Cette valeur particulière du couple d'autoalignement est importante. En effet, à ce niveau de sollicitation de la roue, il existe un glissement dans l'aire de contact entre le pneumatique de la roue et la chaussée et comme noté plus tôt, à même effort latéral, le couple d'autoalignement est une fonction croissante du coefficient d'adhérence maximal. Plus l'angle de braquage critique $\delta_c$ est élevé, plus les conditions d'adhérence entre la roue et le sol sont bonnes. Cet angle de braquage critique est ainsi un bon indicateur de ces conditions d'adhérence en temps réel.

Préférentiellement, on mesure à la fois le couple d'autoalignement et la force latérale et après avoir déterminé l'angle de braquage pour lequel le couple d'autoalignement est maximum, on détermine comme grandeur caractéristique la force latérale $F_{yc}$ correspondant à cet angle de braquage critique $\delta_c$.

Cette valeur de force latérale $F_{yc}$ peut être utilisée comme donnée d'entrée dans des systèmes d'aide à la conduite.

Encore préférentiellement, après avoir déterminé la force latérale $F_{yc}$ correspondant à l'angle de braquage critique $\delta_c$, on estime comme grandeur caractéristique la force latérale maximale $F_{ymax}$ de la roue.

Cette grandeur $F_{ymax}$ est un excellent indicateur des conditions d'adhérence de la roue sur le sol ainsi qu'une entrée très utile pour les dispositifs d'aide à la conduite du véhicule.

On peut estimer simplement $F_{ymax}$ par la formule suivante :

$$ F_{y\max} = F_{yc} * K $$

dans laquelle $K$ est un coefficient caractéristique de la roue. On constate expérimentalement que la valeur de ce coefficient $K$ est de l'ordre de 1,25 pour de très nombreux pneumatiques.

Connaissant $F_{ymax}$, dès que la charge $F_z$ de la roue est connue, il est très aisé d'estimer le coefficient d'adhérence maximal $\mu_{max}$ par la formule :

$$ \mu_{\max} = \frac{F_{y\max}}{F_z} . $$

La charge de la roue peut être mesurée en même temps que le couple d'autoalignement et la force latérale ou par tout autre moyen bien connu de l'homme du métier.

Ce mode de réalisation préférentiel dans lequel on impose une croissance progressive des angles de braquage imposés présente l'avantage de ne nécessiter aucune connaissance préalable des roues. De préférence, on arrête le test dès que l'angle de braquage critique est déterminé, de telle sorte que la force latérale $F_y$ reste inférieure à 85 % de la force latérale maximale estimée.

Cette limite a l'avantage de conserver une bonne stabilité au véhicule.

Les procédés, objets de l'invention, peuvent être mis en oeuvres avec le dispositif décrit ci-après.

Les figures 2 et 3 illustrent de façon très schématique le fonctionnement d'un dispositif permettant la mise en oeuvre du procédé précédemment décrit dans le cas d'un essieu arrière porteur de véhicule automobile. Ces figures sont des vues de dessus des éléments essentiels du dispositif

On voit la roue arrière gauche 1 et la roue arrière droite 3. Ces roues sont montées sur un système porte-fusée 5 et 7 respectivement. Ce système porte-fusée 5, 7 définit un pivot d'axe vertical 9, respectivement 11, qui permet de faire varier l'angle de braquage de la roue. Le système porte-fusée comprend aussi un actionneur 13, respectivement 15, pour piloter l'angle de braquage. Les deux actionneurs 13 et 15 sont commandés par un dispositif de commande commun 17.

A la figure 2, les deux roues 1 et 3 sont dans leur position de réglage usuelle tel que préconisé par le constructeur du véhicule. A la figure 3, les deux roues sont représentées avec un angle de pince $\beta$ de l'ordre de 1 à 1,5 degrés. Les flèches indiquent le sens de déplacement du véhicule. Le système porte-fusée 5, 7 comprend des moyens de mesure des efforts latéraux ou poussées de braquage ainsi que du couple d'autoalignement résultant de la mise en braquage des roues. Le dispositif de commande 17 comprend des moyens de traitement des signaux permettant d'estimer une grandeur liée au coefficient de frottement maximal de la roue sur le sol par comparaison avec des abaques par exemple et de transmettre les données résultantes au conducteur ou aux dispositifs électroniques du véhicule.

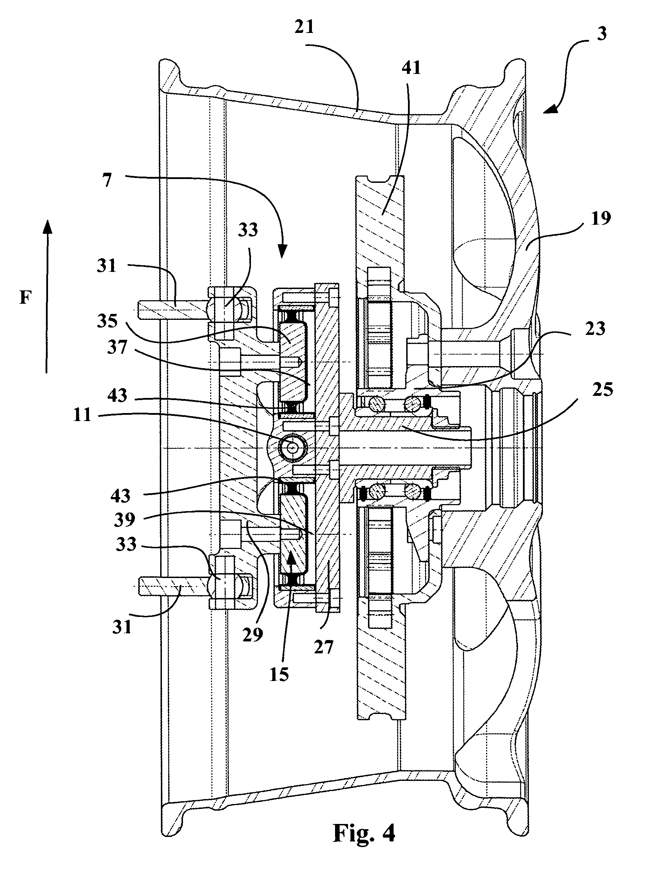

La figure 4 présente en coupe horizontale un mode de réalisation d'un montage de roue selon l'un des objets de l'invention.

La roue 3 représentée est dans une position arrière droite d'un véhicule. La flèche F indique le sens de déplacement du véhicule. Cette roue comprend un pneumatique non représenté, un disque 19 et une jante 21.

La roue 3 est montée en rotation sur une cassette roulement-capteur porte-roue 23 fixée sur la fusée 25.

Cette cassette roulement-capteur porte-roue est équipée de jauges d'extensométrie pour mesurer les déformations de la bague fixe du roulement qui est soumise aux efforts et moments développés au contact entre la roue et le sol. Un exemple d'une telle cassette roulement est le capteur d'efforts ASB3® de la société « SNR Roulements ».

La fusée est associée au véhicule par l'intermédiaire d'un système porte-fusée 7 portant un pivot central 11 permettant la disposition du plan de roue dans deux ou plus de deux positions angulaires par basculement du système 7 relativement au châssis du véhicule.

Le système porte-fusée 7 comprend un porte-fusée 27 équipé d'un actionneur 15 et une platine 29 de liaison au châssis via les bras de suspension 31. Les bras de suspension 31 sont reliés à la platine 29 par des rotules à axe sensiblement horizontal ou des articulations élastiques 33.

Dans l'exemple représenté, l'actionneur 15 comprend un vérin hydroélastique 35 avec deux chambres 37 et 39 remplies d'un fluide incompressible sous une pression variable. Les chambres sont fermées par des pièces élastiques 43 par exemple en matériau caoutchouteux et aptes à se déformer sous l'influence des pressions respectives dans les chambres 37 et 39 et ainsi à imposer à la roue un angle de braquage variable.

En fonction du mode de commande du vérin hydroélastique, cet actionneur peut être binaire ou non. C'est-à-dire qu'il peut avoir deux positions de réglage ou plus de deux.

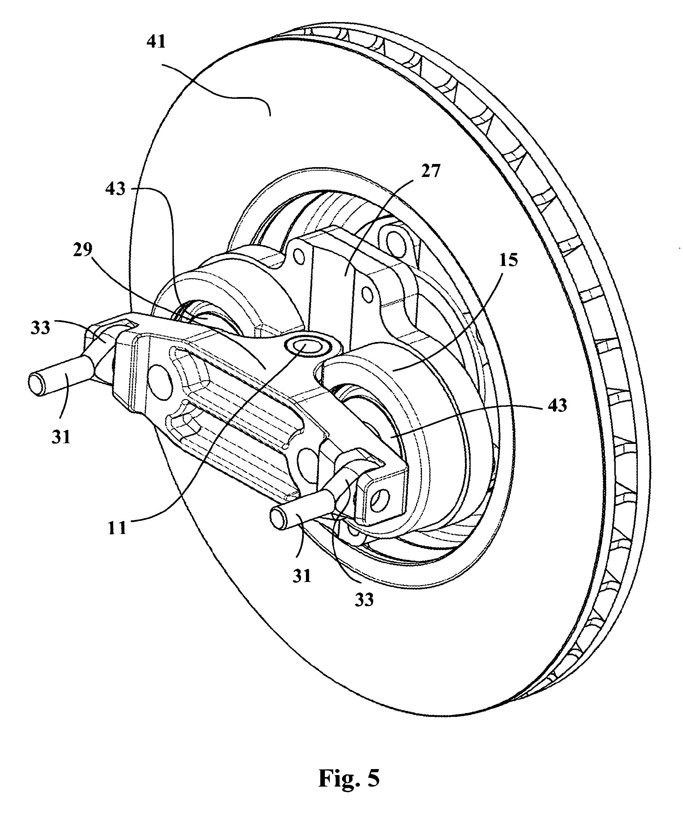

La figure 5 est une vue en perspective partielle, du côté du châssis, du montage de roue de la figure 4. Sont représentés les extrémités des bras de suspension 31, les rotules 33, la platine de liaison 29 avec le pivot 11, le porte-fusée 27 avec l'actionneur 15. On voit aussi le disque de frein 41 lié au porte-roue.

L'invention n'est pas limitée aux exemples décrits et représentés et diverses modifications peuvent y être apportées sans sortir de son cadre défini par les revendications annexées.

**Revendications**

1. Procédé de détermination d'une grandeur caractéristique représentative des conditions d'adhérence d'une roue d'un véhicule en roulage sur un sol donné, comprenant les étapes suivantes :

    - imposer aux deux roues d'un même essieu dudit véhicule une variation simultanée d'angle de braquage donnée, la variation d'angle de braquage étant d'amplitude identique pour les deux roues mais de sens opposés ; et
    - mesurer ladite grandeur caractéristique pour l'une au moins des deux roues.

2. Procédé selon la revendication 1, dans lequel on impose aux deux roues d'un essieu arrière du véhicule une mise en pince simultanée.

3. Procédé selon la revendication 1, dans lequel, on impose aux deux roues d'un essieu avant du véhicule une mise en ouverture simultanée.

4. Procédé selon l'une quelconque des revendications précédentes, dans lequel on impose successivement aux deux roues d'un même essieu plusieurs variations simultanées d'angle de braquage, les variations des angles de braquage étant d'amplitudes identiques pour les deux roues et de sens opposés.

5. Procédé selon l'une quelconque des revendications 1 à 4, dans lequel, après avoir imposé aux deux pneumatiques la variation d'angle de braquage donnée, on effectue la mesure de la grandeur caractéristique après une distance de roulage du véhicule supérieure à la moitié du périmètre desdits pneumatiques.

6. Procédé selon l'une quelconque des revendications précédentes, dans lequel la grandeur caractéristique mesurée est le couple d'autoalignement ($M_Z$) dudit pneumatique.

7. Procédé selon l'une quelconque des revendications 1 à 5, dans lequel la grandeur caractéristique mesurée est l'effort latéral ($F_Y$) dudit pneumatique.

8. Procédé selon l'une quelconque des revendications précédentes, dans lequel la grandeur caractéristique mesurée comprend le couple d'autoalignement ($M_Z$) et l'effort latéral ($F_Y$).

9. Procédé selon l'une quelconque des revendications précédentes, dans lequel les valeurs des angles de braquage imposées sont comprises entre 0,5 et 2 degrés et de préférence entre 1 et 1,5 degrés.

10. Procédé selon l'une quelconque des revendications précédentes, dans lequel, après avoir mesuré la grandeur caractéristique, on détermine le coefficient d'adhérence du pneumatique au moyen d'un abaque reliant ladite grandeur caractéristique et ledit coefficient d'adhérence.

11. Procédé selon la revendication 4, dans lequel on impose une variation monotone croissante de l'angle de braquage avec une cinétique de variation inférieure ou égale à 0,1 degré/mètre parcouru par le véhicule.

12. Procédé selon la revendication 11, dans lequel :

    - on mesure le couple d'autoalignement pour au moins l'une des deux roues ; et
    - on détermine comme grandeur caractéristique l'angle de braquage ($\delta_c$) pour lequel le couple d'autoalignement est maximum.

13. Procédé selon la revendication 11, dans lequel :

    - on mesure le couple d'autoalignement pour au moins l'une des deux roues ;
    - on détermine l'angle de braquage ($\delta_c$) pour lequel le couple d'autoalignement est maximum ; et
    - on détermine comme grandeur caractéristique la force latérale ($F_{yc}$) correspondant audit angle de braquage ($\delta_c$).

14. Procédé selon la revendication 11, dans lequel :

    - on mesure le couple d'autoalignement pour au moins l'une des deux roues ;
    - on détermine l'angle de braquage ($\delta_c$) pour lequel le couple d'autoalignement est maximum ;
    - on détermine la force latérale ($F_{yc}$) correspondant audit angle de braquage ($\delta_c$) ; et
    - on estime comme grandeur caractéristique la force latérale maximale ($F_{ymax}$) de la roue.

**15.** Procédé selon la revendication 14, dans lequel on estime la force latérale maximale ( $F_{y\max}$ ) de la roue par la formule suivante :

$$F_{y\max} = F_{yc} * K$$

dans laquelle : K est un coefficient caractéristique de la roue.

**16.** Procédé selon la revendication 15, dans lequel, la charge de la roue ($F_z$) étant connue, on estime le coefficient d'adhérence maximal par la formule :

$$\mu_{\max} = \frac{F_{y\max}}{F_z}$$

**17.** Procédé selon l'une quelconque des revendications 14 à 16, dans lequel l'angle de braquage maximal imposé est tel que la force latérale reste inférieure à 85 % de la force latérale maximale estimée.

**18.** Procédé selon l'une quelconque des revendications précédentes, dans lequel le véhicule est en roulage ligne droite.

**19.** Procédé selon l'une quelconque des revendications précédentes, dans lequel l'essieu dudit véhicule étant un essieu non directeur et non moteur, avant d'imposer aux dites roues une variation d'angle de braquage donnée, on vérifie que ledit essieu n'est pas soumis à un couple freineur.

**20.** Procédé selon l'une quelconque des revendications précédentes, dans lequel, l'essieu dudit véhicule étant un essieu moteur, avant d'imposer aux dites roues une variation d'angle de braquage donnée, on vérifie que ledit véhicule n'est pas dans une phase d'accélération ou de freinage.

**Patentansprüche**

**1.** Verfahren zur Bestimmung einer Kenngröße, die für die Haftungsbedingungen eines Rads eines Fahrzeugs beim Rollen auf einem gegebenen Boden repräsentativ ist, das die folgenden Schritte enthält:

- den zwei Rädern der gleichen Achse des Fahrzeugs eine gegebene gleichzeitige Einschlagwinkeländerung aufzuzwingen, wobei die Einschlagwinkeländerung für die zwei Räder die gleiche Amplitude aber in entgegengesetzte Richtungen hat; und
- die Kenngröße für mindestens eines der zwei Räder zu messen.

**2.** Verfahren nach Anspruch 1, wobei den zwei Rädern einer Hinterachse des Fahrzeugs eine gleichzeitige Vorspur aufgezwungen wird.

**3.** Verfahren nach Anspruch 1, wobei den zwei Rädern einer Vorderachse des Fahrzeugs eine gleichzeitige Nachspur aufgezwungen wird.

**4.** Verfahren nach einem der vorhergehenden Ansprüche, wobei den zwei Rädern der gleichen Achse nacheinander mehrere gleichzeitige Einschlagwinkeländerungen aufgezwungen werden, wobei die Änderungen der Einschlagwinkel gleiche Amplituden und entgegengesetzte Richtungen für die zwei Räder haben.

**5.** Verfahren nach einem der Ansprüche 1 bis 4, wobei, nachdem den zwei Luftreifen die gegebene Einschlagwinkeländerung aufgezwungen wurde, die Messung der Kenngröße nach einer Rollstrecke des Fahrzeugs größer als die Hälfte des Umfangs der Luftreifen durchgeführt wird.

**6.** Verfahren nach einem der vorhergehenden Ansprüche, wobei die gemessene Kenngröße das Selbstausrichtungsmoment ($M_z$) des Luftreifens ist.

**7.** Verfahren nach einem der Ansprüche 1 bis 5, wobei die gemessene Kenngröße die Seitenkraft (Fy) des Luftreifens ist.

**8.** Verfahren nach einem der vorhergehenden Ansprüche, wobei die gemessene Kenngröße das Selbstausrichtungsmoment ($M_z$) und die Seitenkraft ($F_y$) enthält.

**9.** Verfahren nach einem der vorhergehenden Ansprüche, wobei die Werte der aufgezwungenen Einschlagwinkel zwischen 0,5 und 2 und vorzugsweise zwischen 1 und 1,5 Grad liegen.

**10.** Verfahren nach einem der vorhergehenden Ansprüche, wobei nach dem Messen der Kenngröße der Haftungskoeffizient des Luftreifens mittels eines Nomogramms bestimmt wird, das die Kenngröße und den Haftungskoeffizient verbindet.

**11.** Verfahren nach Anspruch 4, wobei eine zunehmende monotone Änderung des Einschlagwinkels mit einer Änderungskinetik geringer als oder gleich vom Fahrzeug durchfahrenem 0,1 Grad/Meter aufgezwungen wird.

**12.** Verfahren nach Anspruch 11, wobei:

- das Selbstausrichtungsmoment für mindestens eins der zwei Räder gemessen wird; und
- als Kenngröße der Einschlagwinkel ($\delta_c$) bestimmt wird, bei dem das Selbstausrichtungsmoment maximal ist.

13. Verfahren nach Anspruch 11, wobei:

- das Selbstausrichtungsmoment für mindestens eines der zwei Räder gemessen wird;
- der Einschlagwinkel ($\delta_c$) bestimmt wird, bei dem das Selbstausrichtungsmoment maximal ist; und
- als Kenngröße die dem Einschlagwinkel ($\delta_c$) entsprechende Seitenkraft ($F_{yc}$) bestimmt wird.

14. Verfahren nach Anspruch 11, wobei:

- das Selbstausrichtungsmoment für mindestens eins der zwei Räder gemessen wird;
- der Einschlagwinkel ($\delta_c$) bestimmt wird, bei dem das Selbstausrichtungsmoment maximal ist;
- die dem Einschlagwinkel ($\delta_c$) entsprechende Seitenkraft ($F_{yc}$) bestimmt wird; und
- als Kenngröße die maximale Seitenkraft ($F_{ymax}$) des Rads geschätzt wird.

15. Verfahren nach Anspruch 14, wobei die maximale Seitenkraft ($F_{ymax}$) des Rads durch die folgende Formel geschätzt wird:

$$F_{ymax} = F_{yc} * K$$

wobei: K ein charakteristischer Koeffizient des Rads ist.

16. Verfahren nach Anspruch 15, wobei bei bekannter Last des Rads ($F_z$) der maximale Haftungskoeffizient durch die folgende Formel geschätzt wird:

$$\mu_{max} = \frac{F_{ymax}}{F_z}$$

17. Verfahren nach einem der Ansprüche 14 bis 16, wobei der aufgezwungene maximale Einschlagwinkel so ist, dass die Seitenkraft unter 85 % der geschätzten maximalen Seitenkraft bleibt.

18. Verfahren nach einem der vorhergehenden Ansprüche, wobei das Fahrzeug geradeaus fährt.

19. Verfahren nach einem der vorhergehenden Ansprüche, wobei, wenn die Achse des Fahrzeugs keine Lenkachse und keine Antriebsachse ist, bevor den Rädern eine gegebene Einschlagwinkeländerung aufgezwungen wird, überprüft wird, dass die Achse keinem Bremsmoment ausgesetzt ist.

20. Verfahren nach einem der vorhergehenden Ansprüche, wobei, wenn die Achse des Fahrzeugs eine Antriebsachse ist, bevor den Rädern eine gegebene Einschlagwinkeländerung aufgezwungen wird, überprüft wird, dass das Fahrzeug nicht in einer Beschleunigungs- oder Bremsphase ist.

**Claims**

1. Method of determining a characteristic quantity representative of the grip conditions of a wheel of a vehicle running on a given ground, comprising the following steps:

- imposing on the two wheels of one and the same axle of said vehicle a given simultaneous steering angle variation, the steering angle variation being of the same amplitude for the two wheels but in opposite directions; and
- measuring said characteristic quantity for at least one of the two wheels.

2. Method according to Claim 1, in which a simultaneous toe in angle setting is imposed on the two wheels of a rear axle of the vehicle.

3. Method according to Claim 1, in which a simultaneous toe out angle setting is imposed on the two wheels of a front axle of the vehicle.

4. Method according to any one of the preceding claims, in which several simultaneous steering angle variations are imposed in succession on the two wheels of one and the same axle, the variations in the steering angles being of the same amplitude for the two wheels, but in opposite directions.

5. Method according to any one of Claims 1 to 4, in which after having imposed the given steering angle variation on the two tyres, the characteristic quantity is measured after a running distance of the vehicle greater than half the perimeter of said tyres.

6. Method according to any one of the preceding claims, in which the measured characteristic quantity is the self-alignment torque ($M_Z$) of said tyre.

7. Method according to any one of Claims 1 to 5, in which the measured characteristic quantity is the lateral force ($F_Y$) of said tyre.

8. Method according to any one of the preceding claims, in which the measured characteristic quantity comprises the self-alignment torque ($M_Z$) and the lateral force ($F_Y$).

9. Method according to any one of the preceding claims, in which the imposed steering angles are between 0.5 and 2 degrees and preferably between 1 and 1.5 degrees.

10. Method according to any one of the preceding claims, in which, after having measured the characteristic quantity, the grip coefficient of the tyre is determined by means of a chart connecting said characteristic quantity with said grip coefficient.

11. Method according to Claim 4, in which a monotonic increasing variation in the steering angle is imposed, with a rate of variation of less than or equal to 0.1 degrees/metre travelled by the vehicle.

12. Method according to Claim 11, in which:

    - the self-alignment torque is measured for at least one of the two wheels; and
    - the steering angle ($\beta_c$) for which the self-alignment torque is a maximum is determined as characteristic quantity.

13. Method according to Claim 11, in which:

    - the self-alignment torque is measured for at least one of the two wheels;
    - the steering angle ($\beta_c$) for which the self-alignment torque is a maximum is determined; and
    - the lateral force ($F_{yc}$) corresponding to said steering angle ($\beta_c$) is determined as characteristic quantity.

14. Method according to Claim 11, in which:

    - the self-alignment torque is measured for at least one of the two wheels;
    - the steering angle ($\beta_c$) for which the self-alignment torque is a maximum is determined;
    - the lateral force ($F_{yc}$) corresponding to said steering angle ($\beta_c$) is determined; and
    - the maximum lateral force ($F_{ymax}$) of the wheel is estimated as characteristic quantity.

15. Method according to Claim 14, in which the maximum lateral force ($F_{ymax}$) of the wheel is estimated by the following formula:

$$F_{ymax} = F_{yc} \times K$$

in which K is a characteristic coefficient of the wheel.

16. Method according to Claim 15, in which, when the load ($F_Z$) on the wheel is known, the maximum grip coefficient is estimated by the formula:

$$\mu_{max} = \frac{F_{y\,max}}{F_Z}.$$

17. Method according to any one of Claims 14 to 16, in which the proposed maximum steering angle is such that the lateral force remains below 85% of the estimated maximum lateral force.

18. Method according to any one of the preceding claims, in which the vehicle is running in a straight line.

19. Method according to any one of the preceding claims, in which, when the axle of said vehicle is a nonsteerable non-powered axle, a check is made that said axle is not subjected to a braking torque before imposing a given steering angle variation on said wheels.

20. Method according to any one of the preceding claims, in which, when the axle of said vehicle is a powered axle, a check is made that the vehicle is not in an accelerating or braking phase before a given steering angle variation is imposed on said wheels.

Fig. 1

Fig. 2

Fig. 3

Fig. 4

**Fig. 5**

**RÉFÉRENCES CITÉES DANS LA DESCRIPTION**

**Documents brevets cités dans la description**

- WO 03066400 A
- FR 2916412